# EUROPEAN PATENT APPLICATION

(11) **EP 4 806 729 A1**
(43) Date of publication of application: **16.09.2026**
(21) Application number: 26162554.5
(22) Date of filing: 05.03.2026
(51) Int. Cl.: B60R 16/03, G06F 1/30, H02J 7/06

(54) **MULTI-MODULE POWER MANAGEMENT FAULT ISOLATION**

(30) Priority: 13.03.2025 US 202519078932
(71) Applicant: NXP B.V., 5656 AG Eindhoven (NL)
(72) Inventor: Yilmaz, Mehmet Fatih, 5656AG Eindhoven (NL)
(74) Representative: Krott, Michel

(57) **Abstract**

One example discloses a module, including: an e-switch configured to be coupled to a power supply and a load; a controller coupled to the e-switch; wherein the controller is configured to determine if the e-switch was intentionally or unintentionally shutdown; wherein the controller is configured to command the e-switch to send a first power level to the load if the e-switch was intentionally shutdown; wherein the controller is configured to command the e-switch to send a second power level to the load if the e-switch was unintentionally shutdown; wherein at a first time the second power level is less than the first power level; and wherein if at a second time the second power level is greater than the first power level, the controller is configured to command the e-switch to stop sending power to the load.

## Description

The present specification relates to systems, methods, apparatuses, devices, articles of manufacture and instructions for multi-module power management.

### SUMMARY

According to an example embodiment, a module, comprising: an e-switch configured to be coupled to a power supply and a load; a controller coupled to the e-switch; wherein the controller is configured to determine if the e-switch was intentionally or unintentionally shutdown; wherein the controller is configured to command the e-switch to send a first power level to the load if the e-switch was intentionally shutdown; wherein the controller is configured to command the e-switch to send a second power level to the load if the e-switch was unintentionally shutdown; wherein at a first time the second power level is less than the first power level; and wherein if at a second time the second power level is greater than the first power level, the controller is configured to command the e-switch to stop sending power to the load.

In another example embodiment, the module includes a memory; and the controller is configured to determine if the e-switch was intentionally or unintentionally shutdown by reading data stored in the memory.

In another example embodiment, if the controller commanded the e-switch to shutdown, the controller is configured to save an intentional shutdown indicator as data in the memory; and the controller is configured to determine that the e-switch was intentionally shutdown if the intentional shutdown indicator is saved in the memory.

In another example embodiment, the module is configured to be coupled to a communications bus; and the controller is configured to save the intentional shutdown indicator in the memory if the controller received a shutdown command from another module over the communications bus.

In another example embodiment, if the controller commanded the e-switch to shutdown, the controller is configured to save an intentional shutdown indicator as data in the memory; and the controller is configured to determine that the e-switch was unintentionally shutdown if the intentional shutdown indicator is missing from the memory.

In another example embodiment, the memory is located in at least one of: the module, the controller or the e-switch.

In another example embodiment, the controller is configured to command the e-switch to slowly ramp up the second power level to the first power level.

In another example embodiment, if at the second time the second power level is less than or equal to the first power level, the controller is configured to command the e-switch to the first power level to the load.

In another example embodiment, the controller is configured to set a load fault indicator if at the second time the second power level is greater than the first power level.

In another example embodiment, the controller is at least one of: a PMIC (power management integrated circuit), an MCU (microcontroller), or a PHY (physical layer communications circuit).

In another example embodiment, the controller is configured to determine that the e-switch was unintentionally shutdown if the power supply voltage or current drops below a predetermined voltage or current.

In another example embodiment, the controller is configured to determine that the e-switch was unintentionally shutdown if the load current drain exceeds a predetermined current drain.

In another example embodiment, the module includes a memory; the controller is configured to store a current drain of the load in the memory; the controller is configured to compare the current drain of the load stored in the memory to a predetermined maximum permitted current drain; the controller is configured to set a low pre-shutdown current drain indicator if the current drain of the load is equal to or less than the predetermined maximum permitted current drain; and the controller is configured to set a high pre-shutdown current drain indicator if the current drain of the load is greater than the predetermined maximum permitted current drain.

In another example embodiment, if the low pre-shutdown current drain indicator was stored in the memory, then the controller is configured to command the e-switch to send the first power level to the load.

In another example embodiment, if the high pre-shutdown current drain indicator was stored in the memory, then the controller is configured to command the e-switch to send the second power level to the load.

In another example embodiment, the module is a first power control module configured to receive the power supply from a second power control module; the load is a third power control module; and the second and third power control modules are configured operate in a same manner as the first power control module.

In another example embodiment, the first, second, and third power control modules are configured to be embedded in a software defined vehicle (SDV).

In another example embodiment, second power control module is in a highest power supply domain zone of the SDV; first power control module is in a middle power supply domain zone of the SDV; and third power control module is in a lowest power supply domain zone of the SDV.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

### BRIEF DESCRIPTION OF THE DRAWINGS

Figure 1 represents a first example state of a multi-module power management system.
Figure 2 represents a first example state machine for enabling an e-switch that has been powered down.
Figure 3 represents a second example state machine for enabling an e-switch that has been powered down.
Figure 4 represents a third example state machine for enabling an e-switch that has been powered down.
Figure 5 represents an example module for controlling an e-switch.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

### DETAILED DESCRIPTION

Software programmed devices are defined as circuits, vehicles, systems, etc. that are substantially or wholly re-configurable by software. While such programmed devices may have been more common at the chip level (e.g. firmware), software is increasing used to define and control more complex devices. Software Defined Vehicles (SDVs) are an example of a more complex software programmed device. SDVs includes multiple power distributors, zones, domains, edge nodes, modules, circuits, etc. for defining and controlling most, if not eventually all, vehicle functions and end-use applications. SDV architectures differ from traditional vehicle architectures. Traditional vehicle architectures rely on stand-alone modules that individually and independently. In the discussion that follows, various examples of a SDV's power distribution architecture including e-switches are discussed.

E-switches are herein defined to include any electronic switch, transistor, circuit, module, etc. that control power going to anything attached to them. Such e-switches do not necessarily regulate voltage or current, except perhaps for the operation of certain features like high-voltage cut-out, high-current cut out, current limiting for a certain amount of time before cutting power out. E-switches sometimes are designed to adaptively change the high current cutout threshold on a given wire depending on the temperature of the wire, though this is usually estimated by the current that previously ran across that wire and heated it up.)

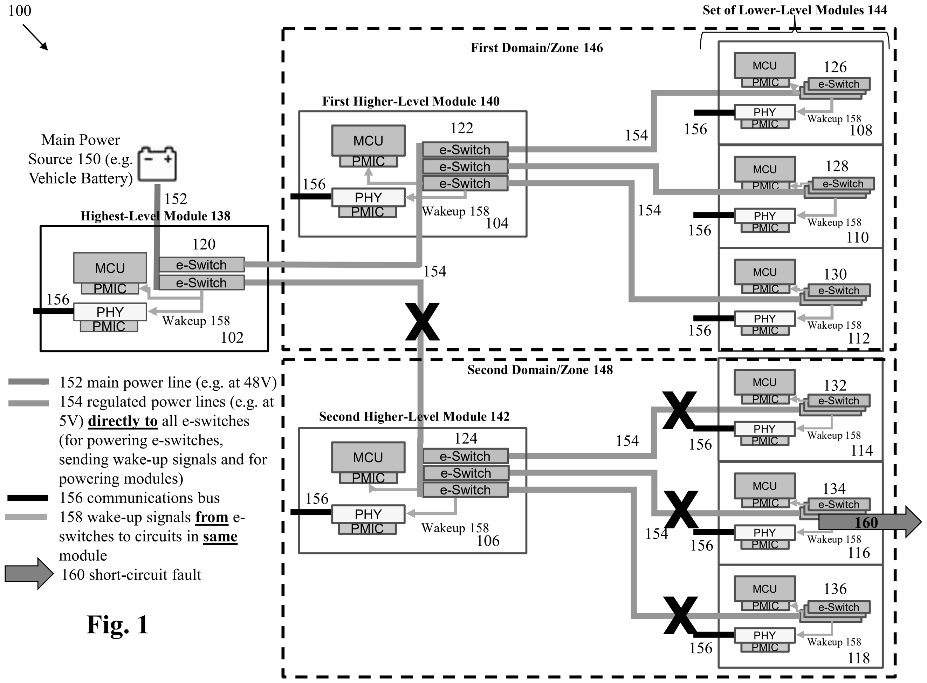

Figure 1 represents a first example state of a multi-module power management system 100. The first example system 100 includes a set of hierarchically ordered modules 102 through 118. In this example, each of the modules 102 through 118 include a set of e-switches 120 through 136, a communications circuit (e.g. PHY with PMIC, as shown), and a controller (e.g. MCU with PMIC, as shown).

In various example embodiments, each module can be partitioned either as domains, zones, edge nodes, etc.; however, Figure 1 shows an example set of partitions which will be further discussed below. These modules can also be differentiated by a number and/or power of their MCUs, a number and current levels of e-Switches, and so on. PMIC as used herein refers to a Power Management. Integrated Circuit.

The set of e-switches 110 through 136 are coupled to a set of loads. These loads can be other modules, circuits, actuators, sensors, and so on. For example, modules 104 and 106 are herein defined as a set of loads to the e-switches 120 in module 102; modules 108 through 112 are herein defined as a set of loads to the e-switches 122 in module 104; and modules 114 through 118 are herein defined as a set of loads to the e-switches 124 in module 106. A set of loads (not shown to reduce clutter in Figure 1) are also coupled to the e-switches 126 through 136 in modules 108 through 118.

In the example embodiment shown in Figure 1, a highest-level module 138 (e.g. for 48V to 5V voltage conversion) in the set of hierarchically ordered modules is module 102. A first higher-level (e.g. intermediate) module 140 is module 104, a second higher-level module 142 is module 106, and a set of lower-level modules 144 are modules 108 through 118.

A possible first domain/zone 146 and second domain/zone 148 are also shown, which is particularly applicable to SDVs.

Also shown are a main power source 150 (e.g. 48V vehicle power supply), a main power line 152 (e.g. at 48V), a set of regulated power lines 154 (e.g. 5V), a communications bus 156, and a set of wake-up signals 158.

In various example embodiments, the e-switches 120 through 136 receive their power from either the main power line 152 (e.g. at 48V) or the set of regulated power lines 154 (e.g. 5V). The e-switches 120 through 136 wake-up on power on, but they also can go to low-power mode via a communication port coupled to listen in on the communications bus 156 to receive on/off commands to turn various loads connected to them on and off, or keep the loads' on/off status as is before putting the e-switch itself into a low-power mode. In some example embodiments, each of the e-switches have a unique address that can receive messages directly from the communications bus.

The e-switches 120 through 136 can be shutdown in at least two ways: intentionally and unintentionally.

Examples of an intentional shutdown include a vehicle user turning off the vehicle's loads (e.g. headlights or windshield wipers) by means of a command that is either generated by the software running in a module's MCU or that is generated elsewhere and then sent to a module's MCU in which case the said MCU commands one of the module's e-switches to turn off.

Examples of an unintentional shutdown include fault conditions (such as an excessive current condition) (e.g. perhaps caused by a short-circuit fault 160) that is detected by the e-switch on one of its connected loads (e.g. headlights, windshield wipers, etc.) where the e-switch initiates the shutdown without having previously received a command from the module's MCU or data bus to perform such a shutdown.

Thus if the e-switches 120 through 136 open their load circuits in response to a command (e.g. turn off the headlights) then they are intentionally shutdown. However, if they open their load circuits in response to a fault condition (e.g. a short-circuit in, a load or, somewhere in the SDV power network) then they are unintentionally shutdown.

If multiple of such e-switches are hierarchically cascaded, as is typical in a SDV power network, then a fault anywhere in the hierarchy generates a current spike that exceeds an intervention threshold (i.e. maximum current) of all of them. Since the e-switches involved do not have the time for a coordinated action since the short-circuit/overload event demands immediate action, all of the e-switches race to shutdown as quickly as possible to prevent further damage to other loads and circuits in the SDV.

After the race, a fastest first e-switch opens the cascaded circuit and shuts itself down and which necessarily also shuts down all of its downstream loads. Which e-switch is the fastest tends to be random, and the fastest first e-switch in response to a first fault event, might not be the fastest first e-switch in response to a second fault event. The fastest first e-switch and its downstream loads are all unintentionally shutdown.

The higher the fastest first e-switch is in the hierarchy of cascaded e-switches, then a greater number of its downstream loads (e.g. other downstream modules with e-switches) are forcibly shutdown.

As the fastest first e-switch repowers itself and all of its downstream loads (e.g. branches) the faulty downstream load is also powered on again, creating a new fault event (e.g. another current spike), thereby again tripping a new fastest first e-switch and thus creates a vicious shutdown/repower cycle that could take sometime to end.

The example 100 in Figure 1 shows just such a scenario. In example 100 a load of a 3rd e-switch 136 in edge module 116 has a short-circuit fault 160, and a current through that load spikes or becomes excessive. Assuming that this excessive current drain exceeds short circuit thresholds for the 3^{rd} e-switch 136 in edge module 116 as well as a 2^{nd} e-switch 124 in higher level module 106 as well as a 2^{nd} e-switch 120 in the highest-level module 138.

Any one of these three modules 102, 106, 116 can be first to open depending on which one has a fastest state machine. There is no knowing of which one trips first, because this protection event is governed by the state machines, and it can take an indeterminate amount of time. Depending upon which e-switch in these modules 102, 106, 116 trips first (e.g. how high in the module hierarchical chain that e-switch is) a lot of healthy loads and e-switches will be unpowered even though they are not at fault.

For example, if the 2nd e-switch 120 in the highest-level module 138 is first to open, then all of modules 106, 114, 116, 118 and their loads (e.g. 12 e-switch channels and loads) will be shutdown, and only because just one load powered by edge module 116 experienced the short-circuit fault 160.

Similarly, if the 2^{nd} e-switch 124 in module 106 trips first, it would un-power the edge modules 114, 116, 118, which would then kill all loads connected to these modules as well even though only one of the loads connected to the e-switch 134 in module 116 has a fault.

This chaotic and randomized shutdown sequence is in part caused since short-circuit events 160 can be dangerous and there is not much time for these modules to communicate and figure out where exactly the fault is at. If these modules had more time, then they maybe could have pinpointed which exact e-switch was connected to the short-circuit fault 160. Apart from not having time to communicate the problem, the modules that were forcibly shutdown because an e-switch at a higher level in the hierarchy happened to be faster, are unpowered, therefore they are unable to communicate (or diagnose the problem for that matter) because they are now without power (e.g. their MCUs are down).

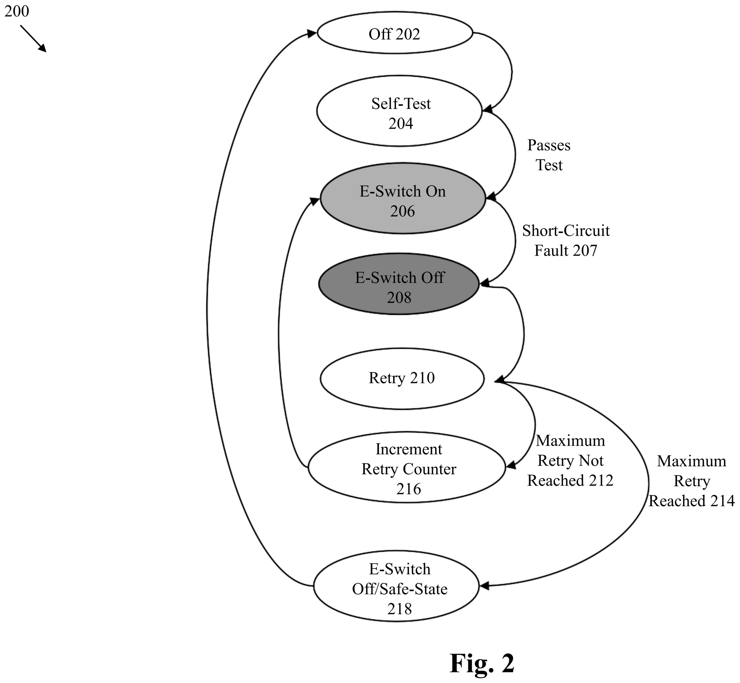

Figure 2 represents a first example state machine 200 for enabling an e-switch that has been powered down. Initially the e-switch is off 202 which could have occurred since it was normally powered down (e.g. an intentional shutdown in response to a shutdown command) or was forced to power down (e.g. an unintentional shutdown due to a short-circuit fault 160). A self-test 204 is performed. The e-switch is turned on 206 if it passes the self-test 204.

The e-switch retries to re-start 210. If a maximum retry count is not reached 212, then increment a retry counter 216 and the e-switch is turned on 206 again. However if maximum retry reached 214, then the e-switch enters an e-switch off/safe-state 218 and report their state to their modules' MCU.

If the e-switch was intentionally shutdown in response to a shutdown command, then the e-switch will power up normally and resume supplying power to its loads. However if the e-switch was unintentionally shutdown due to a short-circuit fault 160, then the e-switch will be unintentionally turned off 208 again since the short circuit fault 160 still remains.

In the scenario described in Figure 1, if an e-switch in a middle of the hierarchy (e.g. module 106 is the fastest first e-switch to be unintentionally shutdown due to a fault event, then its upstream e-switches (e.g. in module 102 will still be operational, but all of its downstream loads (e.g. e-switches in modules 114, 116, 118) will have also been unintentionally shutdown and without power. Thus the module 106 will begin re-powering itself and its downstream loads first.

The state machine of the fastest first e-switch which was itself unintentionally shutdown (e.g. module 106) will re-power its downstream loads (e.g. modules 114, 116, 118) to see if the fault condition persists. Since the fault condition still exists, a new randomly self-selected fastest first e-switch somewhere in the hierarchy will unintentionally shutdown again and the fault cycle repeats.

Now discussed are example embodiments of e-switches that have modified state machines with memory that can distinguish whether their last shutdown was intentional or unintentional and avoid the unstable and unpredictable re-powering scenarios such as described above.

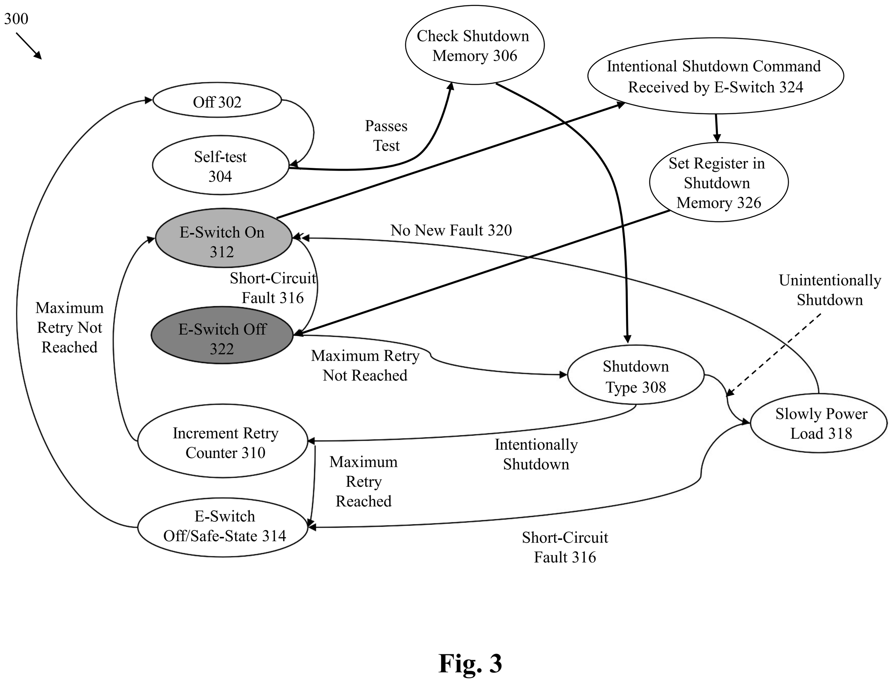

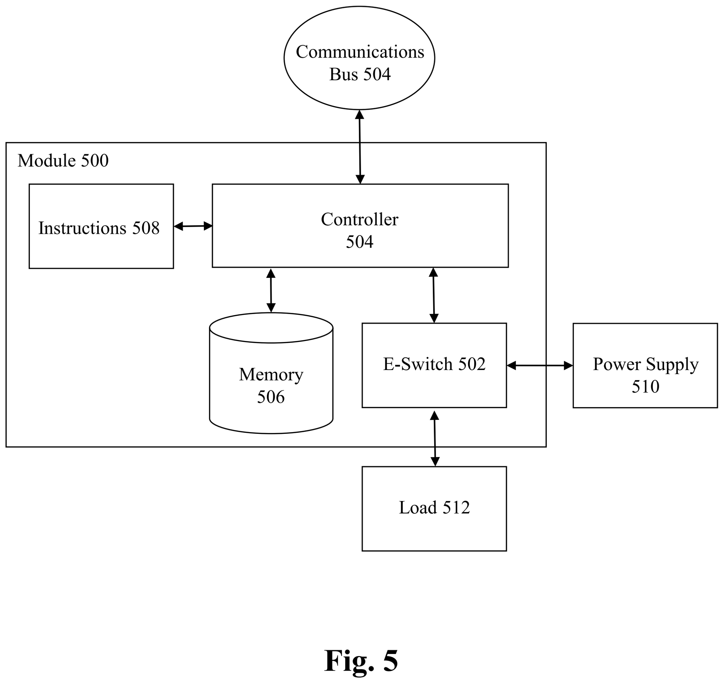

Figure 3 represents a second example state machine 300 for enabling an e-switch that has been powered down. In most example embodiments, a controller (e.g. see Figure 5 discussed below) is configured to include and/or access a set of instructions for effecting the second example state machine 300.

Initially the e-switch is off 302 which could have occurred since it was normally powered down (e.g. an intentional shutdown in response to a shutdown command) or was forced to power down (e.g. an unintentional shutdown due to a short-circuit fault 160). A self-test 304 is performed in response to an external command for the e-switch to power-up.

If the e-switch passes the self-test 304, the e-switch (or the e-switch's controller) checks its shutdown memory 306 to determine if the e-switch was intentionally shutdown or unintentionally shutdown. In various example embodiments, the memory available to the e-switch is in at least one of: the e-switch itself, the e-switch's module, the PMIC, the MCU, the PHY, or coupled to any of these circuits. Note, Figure 5 (discussed below) shows an example embodiment where the memory is part of the e-switch itself.

If the e-switch's shutdown type 308 was intentional (e.g. in response to a shutdown command over a communications bus, or from another module, from the module's MCU, PMIC or PHY), then the e-switch (or the e-switch's controller) will increment the retry counter 310. If the maximum retry is not reached, the controller will turn the e-switch on 312, set an all-good flag, and the e-switch will resume supplying nominal power to its loads. However, if the maximum retry is reached, then the controller will put the e-switch into an off/safe-state 314.

However if the e-switch was turned off 322 and the e-switch's shutdown type 308 was unintentional (e.g. as a fastest first e-switch responding to a short-circuit fault 316, or as a downstream e-switch being shutdown by the fastest first e-switch), then the e-switch will slowly ramp up power to its load 318.

If there is no new fault 320, then the e-switch will fully turn on 312 and supply nominal power to its loads. However, if during power ramp up another short-circuit fault 316 occurs, then the e-switch will be put into the off/safe-state 314.

During the course of the e-switch's normal operation, the e-switch (or the e-switch's controller) may receive a command to intentionally shutdown 324 the e-switch. In response to the shutdown command, the e-switch (or the e-switch's controller) is configured to actively set a register in the shutdown memory 326 to a predetermined state (e.g. an intentional shutdown indicator/flag) indicating that the shutdown was intentional. Thus the memory helps the e-switch's state machine know if it was not shutdown in a controlled manner (i.e. was subject to an unintentional shutdown).

For example, the e-switch (or the e-switch's controller) can be configured to actively set a register in the shutdown memory 326 to a predetermined state indicating that the shutdown was intentional. Then, when the e-switch begins to repower up and check the shutdown memory 306 for the shutdown type 308, if the memory register is in the known state, then the e-switch repowers normally. However if the memory register is in a state other than the known state, then then the e-switch interprets this as an unintentional shutdown and responds as discussed herein.

In some example embodiments, cautious energizing involves measuring the downstream load's impedance as current is slowly ramped up. However in other example embodiments, cautious energizing involves turning on the e-switch fully, but only very briefly with fast detection, acting as a current generator and measuring the output voltage to check for any short circuit faults 316.

By slowly ramping their output current, the e-switch (in conjunction with the e-switch's controller) can better identify which of its downstream loads caused the short-circuit fault 316 (e.g. the e-switch's/load's current drain exceeds a predetermined current drain).

Using this modified state machine 300, random shutdowns of other e-switches in the hierarchy is prevented since the predetermined current drain is less than a current drain that would cause the other e-switches in the hierarchy to trip (i.e. unintentionally shutdown). As a result, the vicious cycle of a random fastest first e-switch to reboot first in the hierarchy is broken.

Once an e-switch identifies and isolates the faulty downstream e-switch/load, the e-switch can then turn on and fully power its other downstream e-switches/loads that were not at fault and thus maintain a maximum operational status of the entire e-switch hierarchy in the SDV.

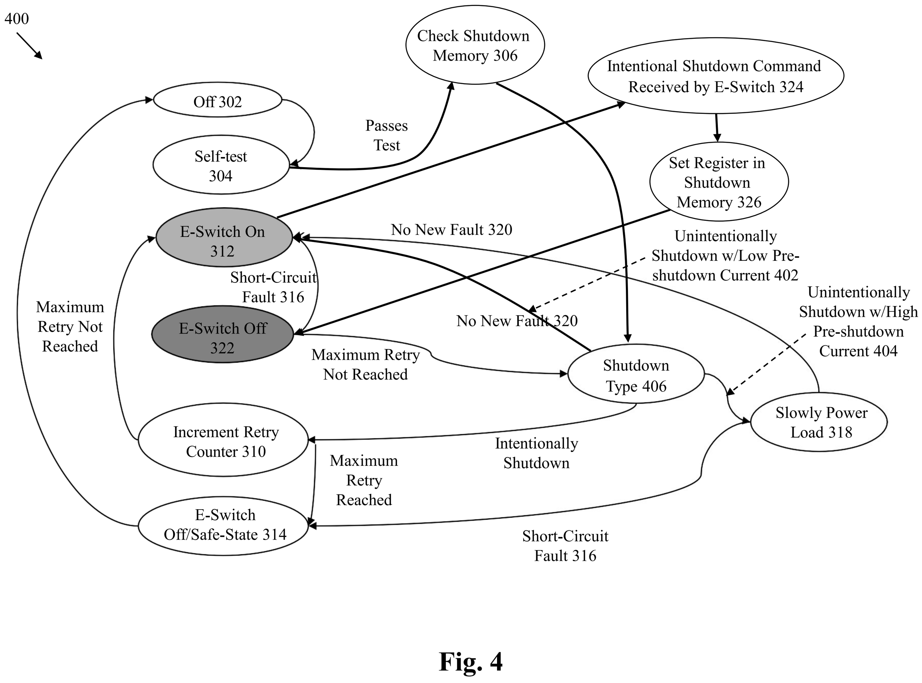

Figure 4 represents a third example state machine 400 for enabling an e-switch that has been powered down. The third example state machine 400 operates substantially as discussed for the second example state machine 300, except for the following modifications.

First, the e-switch (or the e-switch's controller) is configured to store a current drain value for each of its loads in the shutdown memory. These current drain values may either be stored periodically, and/or as a last emergency act right before the e-switch is unintentionally shutdown.

In some example embodiments the e-switch includes a comparator that compares each load's current drain to a predetermined maximum permitted current drain. Then the e-switch may only store a binary in a memory register indicating whether the current drain was a low pre-shutdown current drain 402 or a high pre-shutdown current drain 404.

Second, the e-switch is configured with a new shutdown type 406. If the e-switch's shutdown type 406 was intentional (e.g. in response to a shutdown command over a communications bus, or from another module, from the module's MCU, PMIC or PHY), then the e-switch will operate as described for the shutdown type 308 in the second example state machine 300.

However if the e-switch was turned off 322 and the e-switch's shutdown type 406 was unintentional (e.g. as a fastest first e-switch responding to a short-circuit fault 316, or as a downstream e-switch being shutdown by the fastest first e-switch), then the e-switch will also check shutdown memory 306 for whether each of its load's current drain was a low pre-shutdown current drain 402 or a high pre-shutdown current drain 404.

If the load's current drain was a low pre-shutdown current 402 at the time of the unintentional shutdown, then the controller in the e-switch assumes that there was no new fault 320 and the e-switch is powered on 312 normally.

However, if the load's current drain was a high pre-shutdown current drain 404 at the time of the unintentional shutdown, then the controller in the e-switch assumes that there was may have been one or more short-circuit faults 316 and the e-switch is configured to slowly ramp up power to it's load 318 and subsequently operate as described for the second example state machine 300 slowly ramp up power to load 318 discussion.

Thus for example using the Figure 2 reference numbers, if the e-switch 132 in module 114 was shutdown abruptly (i.e. unintentionally shutdown) and the last current drain was low, the e-switch 132 assumes that the e-switch 132 was unpowered abruptly by a higher-level switch 124 which was protecting against a fault in another module 116 of the hierarchy, but ended up un-powering the entire zone 148 (including modules 114, 116, 118) that the e-switch 132 belongs to.

However, if it (i.e. the e-switch 134 in module 116) was shutdown abruptly and the last current drain was high, it assumes that its downstream circuit (i.e. one of its e-switches 134) has the short-circuit fault 160.

Figure 5 represents an example module 500 for controlling an e-switch 502. The example module 500 includes the e-switch 502, a controller 504, a memory 506, and state machine instructions 508.

The module 500 is coupled to a power supply 510, a load 512, and a communications bus 514 (e.g. connections to the communications bus 156, the load, the MCU, the PMIC, the PHY, etc.)

The state machine instructions 508 are effected by the controller 504 as discussed above in either the second example state machine 300 of Figure 3 or the third example state machine 400 of Figure 4.

In many example embodiments, the instructions and/or state machine operations described above can be implemented as a set of software code stored in a non-transitory computer-readable or computer-usable medium. In other example embodiments, this instructions and/or state machine operations can be implemented using logic gates, application specific chips, firmware, and/or other hardware.

Various instructions and/or operational steps discussed in the above Figures can be executed in any order, unless a specific order is explicitly stated. Also, those skilled in the art will recognize that while some example sets of instructions/steps have been discussed, the material in this specification can be combined in a variety of ways to yield other examples as well, and are to be understood within a context provided by this detailed description.

In those example embodiments where these instructions/steps are embodied as a set of executable instructions in a non-transitory computer-readable or computer-usable media which are effected on a computer or machine programmed with and controlled by said executable instructions. Said instructions are loaded for execution on a processor (such as one or more CPUs). Said processor includes microprocessors, microcontrollers, processor modules or subsystems (including one or more microprocessors or microcontrollers), or other control or computing devices. A processor can refer to a single component or to plural components. Said computer-readable or computer-usable storage medium or media is (are) considered to be part of an article (or article of manufacture). An article or article of manufacture can refer to any manufactured single component or multiple components. The non-transitory machine or computer-usable media or mediums as defined herein excludes signals, but such media or mediums may be capable of receiving and processing information from signals and/or other transitory mediums.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

## Claims

1. A module, comprising:
an e-switch configured to be coupled to a power supply and a load;
a controller coupled to the e-switch;
wherein the controller is configured to determine if the e-switch was intentionally or unintentionally shutdown;
wherein the controller is configured to command the e-switch to send a first power level to the load if the e-switch was intentionally shutdown;
wherein the controller is configured to command the e-switch to send a second power level to the load if the e-switch was unintentionally shutdown;
wherein at a first time the second power level is less than the first power level; and
wherein if at a second time the second power level is greater than the first power level, the controller is configured to command the e-switch to stop sending power to the load.

2. The module of claim 1:
wherein the module includes a memory; and
wherein the controller is configured to determine if the e-switch was intentionally or unintentionally shutdown by reading data stored in the memory.

3. The module of claim 2:
wherein if the controller commanded the e-switch to shutdown, the controller is configured to save an intentional shutdown indicator as data in the memory; and
wherein the controller is configured to determine that the e-switch was intentionally shutdown if the intentional shutdown indicator is saved in the memory.

4. The module of claim 3:
wherein the module is configured to be coupled to a communications bus; and
wherein the controller is configured to save the intentional shutdown indicator in the memory if the controller received a shutdown command from another module over the communications bus.

5. The module of any one of claims 2 to 4:
wherein if the controller commanded the e-switch to shutdown, the controller is configured to save an intentional shutdown indicator as data in the memory; and
wherein the controller is configured to determine that the e-switch was unintentionally shutdown if the intentional shutdown indicator is missing from the memory.

6. The module of any one of claims 2 to 5:
wherein the memory is located in at least one of: the module, the controller or the e-switch.

7. The module of any preceding claim:
wherein the controller is configured to command the e-switch to slowly ramp up the second power level to the first power level.

8. The module of any preceding claim:
wherein if at the second time the second power level is less than or equal to the first power level, the controller is configured to command the e-switch to the first power level to the load.

9. The module of any preceding claim:
wherein the controller is configured to set a load fault indicator if at the second time the second power level is greater than the first power level.

10. The module of any preceding claim:
wherein the controller is at least one of: a PMIC (power management integrated circuit), an MCU (microcontroller), or a PHY (physical layer communications circuit).

11. The module of any preceding claim:
wherein the controller is configured to determine that the e-switch was unintentionally shutdown if the power supply voltage or current drops below a predetermined voltage or current.

12. The module of any preceding claim:
wherein the controller is configured to determine that the e-switch was unintentionally shutdown if the load current drain exceeds a predetermined current drain.

13. The module of any preceding claim:
wherein the module includes a memory;
wherein the controller is configured to store a current drain of the load in the memory;
wherein the controller is configured to compare the current drain of the load stored in the memory to a predetermined maximum permitted current drain;
wherein the controller is configured to set a low pre-shutdown current drain indicator if the current drain of the load is equal to or less than the predetermined maximum permitted current drain; and
wherein the controller is configured to set a high pre-shutdown current drain indicator if the current drain of the load is greater than the predetermined maximum permitted current drain.

14. The module of claim 13:
wherein if the low pre-shutdown current drain indicator was stored in the memory, then the controller is configured to command the e-switch to send the first power level to the load.

15. The module of claim 13 or 14:
wherein if the high pre-shutdown current drain indicator was stored in the memory, then the controller is configured to command the e-switch to send the second power level to the load.
